# EUROPÄISCHE PATENTSCHRIFT

(11) **EP 2 632 764 B1**
(45) Veröffentlichungstag und Bekanntmachung des Hinweises auf die Patenterteilung: **08.06.2016**
(21) Anmeldenummer: 11775927.4
(22) Anmeldetag: 07.10.2011
(51) Int. Cl.: B60N 2/06, B60N 2/04, B60N 2/16

(54) **SITZUNTERGESTELL FÜR KRAFTFAHRZEUGSITZE**
SEAT UNDERFRAME FOR MOTOR VEHICLE SEATS
BÂTI DE SIÈGE POUR SIÈGES DE VÉHICULE À MOTEUR

(30) Priorität: 27.10.2010 DE 102010043012
(43) Veröffentlichungstag der Anmeldung: 04.09.2013
(73) Patentinhaber: Johnson Controls Metals and Mechanisms GmbH & Co. KG, 42699 Solingen (DE)
(72) Erfinder: DOMGÖRGEN, Mark, 42719 Solingen (DE); GUMBRICH, Markus, 42653 Solingen (DE); MAGNUS, Nils, 42859 Remscheid (DE)
(74) Vertreter: Loock, Jan Pieter
(86) Internationale Anmeldenummer: PCT/EP2011/067559
(87) Internationale Veröffentlichungsnummer: WO 2012/055691

(56) Entgegenhaltungen:
- WO-A1-02/18170
- WO-A2-2011/113725
- DE-A1- 19 758 237
- DE-A1-102009 012 958
- FR-A1- 2 810 000

## Beschreibung

Die Erfindung betrifft ein Sitzuntergestell für Kraftfahrzeugsitze, mit
- zwei im Abstand voneinander angeordneten und jeweils eine Sitzschiene und eine Bodenschiene aufweisenden Schienenpaaren,
- einem Sitzträger,
- jeweils zwei einenends gelenkig mit dem Sitzträger und anderenends gelenkig mit den Sitzschienen verbundenen, den Maximalabstand zwischen dem Sitzträger und den Sitzschienen festlegenden Schwenkarmen und
- einer den Sitzträger zwischen einer unteren Ausgangslage und einer Endlage verstellenden Antriebseinheit.

Sitzuntergestellte der eingangs genannten Art sind in vielfältigen Ausgestaltungen aus dem Stand der Technik bekannt. Sie dienen dazu, die eigentlichen Kraftfahrzeugsitze, welche zur Aufnahme der Fahrzeuginsassen dienen, gegenüber dem Fahrzeugboden verstellbar am Fahrzeug anzuordnen, so dass eine optimale Anpassung des Kraftfahrzeugsitzes an die jeweiligen Nutzer möglich ist.

Neben einer Ausgestaltung der Sitzuntergestellte, die eine Längsverstellung des Kraftfahrzeugsitzes ermöglicht, weisen die Sitzuntergestelle in der Regel ferner einen Aufbau auf, der die Möglichkeit einer Höhenverstellung des entsprechenden Kraftfahrzeugsitzes zwischen einer Höhenendlage, die die höchste Sitzposition festlegt, und einer Niedrigstposition, die die unterste Sitzposition bestimmt, erlaubt, so dass die Kraftfahrzeugsitze optimal an die persönlichen Bedürfnisse des jeweiligen Nutzers angepasst werden können.

Eine entsprechende Vorrichtung zum schienenlosen Verstellen der Höhen- und Längsposition sowie der Neigung eines Fahrzeugssitzes relativ zu einem Fahrzeugboden ist aus der Druckschrift WO 02/18170 A1 bekannt.

Sowohl die Längseinstellung wie auch die Einstellung der Sitzhöhe eines Fahrer- oder Beifahrersitzes haben einen wesentlichen Einfluss auf die Beinfreiheit der im Fahrzeugfond hinter dem Beifahrer oder Fahrer Platz nehmenden Personen, welche oftmals sehr begrenzt ist und daher nur einen geringen Komfort bietet. Im Falle einer Nichtbenutzung des Beifahrersitzes kann die Beinfreiheit für den hinter dem Beifahrersitz Platz nehmenden Insassen zwar durch eine Verstellung des Kraftfahrzeugsitzes in eine vorderste Position erhöht werden. Eine weitergehende Steigerung der Beinfreiheit durch eine Änderung der Sitzhöhe des Beifahrersitzes ist jedoch aufgrund einer begrenzten Einstellbarkeit der Sitzhöhe bekannter Kraftfahrzeugsitze nur bedingt möglich.

Hiervon ausgehend liegt der Erfindung die Aufgabe zugrunde ein Sitzuntergestell für Kraftfahrzeugsitze, insbesondere für Beifahrersitze bereitzustellen, die es ermöglichen, den Kraftfahrzeugsitz in eine Position zu überführen, in der der sich durch die Beinfreiheit ergebende Sitzkomfort hinter dem Kraftfahrzeugsitz in ergänzender Weise gesteigert werden kann.

Die Erfindung löst die Aufgabe durch ein Sitzuntergestell mit den Merkmalen des Anspruchs 1. Vorteilhafte Weiterbildungen der Erfindung sind in den abhängigen Ansprüchen angegeben.

Das erfindungsgemäße Sitzuntergestell erlaubt zur Festlegung der Sitzhöhe eine Einstellung des Abstands des Sitzträgers von der Sitzschiene. Hierzu ist der Sitzträger, welcher gemeinsam mit einer Polsterung die Sitzfläche des Kraftfahrzeugsitzes bildet, entweder mittelbar unter Zwischenschaltung von weiteren Sitzbauteilen oder unmittelbar, bspw. über Seitenteile des Sitzträgers beiderseits über jeweils zwei gelenkig gelagerte Schwenkarme mit der Sitzschiene verbunden. Der Abstand des Sitzträgers von der Sitzschiene wird somit durch die Schwenkbewegung des vorderen und hinteren Schwenkarms um deren Anlenkpunkt an der Sitzschiene vorgegeben. Auch der Maximalabstand wird somit durch die Schwenkarme festgelegt, wobei der Maximalabstand zwischen der Sitzschiene und dem Sitzträger dem oberen Totpunkt des Sitzträgers gegenüber den Sitzschienen entspricht.

Zur Einstellung und in der Regel auch zur Festlegung der Sitzhöhe dient eine Antriebseinheit, welche eine Verlagerung des Sitzträgers gegenüber den Sitzschienen auf der durch die Schwenkarme festgelegten Kurvenbahn erlaubt. Kennzeichnend für das erfindungsgemäße Sitzuntergestell ist die Ausgestaltung der Antriebseinheit derart, dass diese eine Verstellung des Sitzträgers über eine im Normalbetrieb festgelegte Höhenendlage hinaus erlaubt. Im Normalbetrieb endet die Höhenverstellung in der Höhenendlage, die regelmäßig durch eine Endstellung der Antriebseinheit festgelegt ist. Die Antriebseinheit des erfindungsgemäßen Sitzuntergestells erlaubt hingegen in einem vom Normalbetrieb abweichenden Betriebsmodus eine Verlagerung über die Höhenendlage hinaus, so dass der Komfort des Fondpassagiers durch eine erhöhte Beinfreiheit gesteigert ist. Die Festlegung der Betriebsarten, bzw. ein Wechsel zwischen wird erfindungsgemäss durch eine geeignete Steuerungselektronik erreicht.

Nach einer Weiterbildung der Erfindung ist die Antriebseinheit derart ausgebildet, dass sie eine Verstellung des Sitzträgers in die den Maximalabstand aufweisende Position ermöglicht. Eine derartige, von bekannten Sitzuntergestellen abweichende Ausgestaltung der gelenkigen Verbindung von Sitzträger und Sitzschiene sowie der Antriebseinheit ermöglicht es, das Sitzuntergestell gegenüber bekannten Sitzträgern in einem größeren Bereich zu verstellen, nämlich zumindest bis in den bei bekannten Systemen nicht zu erreichenden oberen Totpunkt des Sitzträgers gegenüber der Sitzschiene.

Diese erfindungsgemäße Ausgestaltung ermöglicht es, die Beinfreiheit im Bereich hinter einem Kraftfahrzeugsitz mit einem erfindungsgemäßen Sitzuntergestell gegenüber bekannten Kraftfahrzeugsitzen in ergänzender Weise zu steigern. Hierdurch wird der Komfort für die in diesem Bereich Platz nehmenden Personen gegenüber bekannten Kraftfahrzeugsitzen in erheblicher Weise gesteigert, ohne dass die grundsätzliche Nutzbarkeit eines unter Verwendung des erfindungsgemäßen Sitzuntergestells hergestellten Kraftfahrzeugsitzes beeinträchtigt wird. Das erfindungsgemäße Sitzuntergestell stellt eine besonders einfache und kostengünstige Lösung zur Komfortsteigerung für hinter einem entsprechenden Kraftfahrzeugsitz Platz nehmenden Insassen dar. Dabei bietet sich das erfindungsgemäße Sitzuntergestell insbesondere für einen Beifahrersitz eines als Chauffeurfahrzeug genutzten Fahrzeugs an, um den Komfort der zu fahrenden Person zu steigern.

Grundsätzlich kann die Endlage durch die die Sitzhöhe bestimmende Antriebseinheit frei festgelegt werden. So ist erfindungsgemäss vorgesehen, dass die Antriebseinheit derart ausgebildet ist, dass die durch die Antriebseinheit festgelegte Endlage des Sitzträgers dem Maximalabstand des Sitzträgers gegenüber der Sitzschiene entspricht. Demgemäss ist die Antriebseinheit derart ausgebildet, dass sie den Sitzträger ausgehend von der unteren Ausgangslage bis in eine Endlage verstellt, die mit dem Maximalabstand des Sitzträgers zu den Sitzschienen, also der oberen Totpunktlage des Sitzträgers übereinstimmt. Die Erfindung zeichnet sich dabei dadurch aus, dass sie in der Regel die Verwendung einer kostengünstig herstellbaren Antriebseinheit ermöglicht.

Erfindungsgemäss ist die Antriebseinheit zur Verstellung des Sitzträgers in eine Endlage ausgebildet, die ausgehend von der unteren Ausgangslage des Sitzträgers nach Überschreiten des Maximalabstands angeordnet ist. Demgemäss ermöglicht die Antriebseinheit eine Vertellung des Sitzträgers über den oberen Totpunkt hinaus in eine - ausgehend von der Ausgangslage - dahinterliegenden Position. Eine entsprechende Verstellmöglichkeit des Sitzträgers ermöglicht es, die Beinfreiheit im Bereich hinter einem Kraftfahrzeugsitz mit einem derart weitergebildeten Sitzuntergestell in ergänzender Weise zu steigern. Aus Sicherheitsgründen ist die Antriebseinheit mit einer Sensorik versehen, die eine Verstellung eines Kraftfahrzeugsitzes mit einem erfindungsgemäßen Sitzuntergestell in den oberen Totpunkt bzw. darüber hinaus verhindert, wenn der Kraftfahrzeugsitz belegt ist.

Die Ausgestaltung der Antriebseinheit kann grundsätzlich in beliebiger Weise erfolgen, sofern gewährleistet ist, dass durch eine Betätigung eine Verstellung des Sitzträgers entlang der durch die Schwenkarme vorgegebenen Kurvenbahn erfolgt. Erfindungsgemäß ist die Antriebseinheit längenveränderlich ausgebildet und einenends gelenkig mit der Sitzschiene und anderenends gelenkig mit dem Sitzträger verbunden. Bei einer entsprechenden Ausgestaltung der Antriebseinheit erfolgt eine Sitzhöhenverstellung durch eine manuell oder motorisch erzeugte Reduzierung bzw. Erhöhung der Länge der Antriebseinheit, wodurch eine Verstellung des Sitzträgers gegenüber der Sitzschiene erfolgt. Die gelenkige Verbindung der Antriebseinheit mit sowohl der Sitzschiene als auch dem Sitzträger gewährleistet dabei eine Verlagerung des Sitzträgers gegenüber der Sitzschiene im Falle einer Betätigung der Antriebseinheit. Die Verwendung einer längenveränderlichen Antriebseinheit zeichnet sich dabei dadurch aus, dass sie sich besonders einfach und kostengünstig herstellen lässt und überdies eine sehr genaue Festlegung und Sicherung der Sitzhöhe erlaubt.

Die konkrete Ausgestaltung der Antriebseinheit kann, wie bereits an obiger Stelle angeführt, in beliebiger Weise ausgeführt sein. Im Falle der erfindungsgemäss vorgesehenen längenveränderlichen Antriebseinheit kann diese z. B. durch eine längenveränderliche Hydraulik- und/oder Pneumatikeinheit gebildet sein. Nach einer besonders vorteilhaften Ausgestaltung der Erfindung ist die Antriebseinheit jedoch durch einen Spindelantrieb gebildet. Der Spindelantrieb, welcher sowohl in Verbindung mit einer längenveränderlichen Antriebseinheit als auch z. B. zum Antrieb einer Getriebeeinheit genutzt werden kann, über welche der Sitzträger verlagerbar mit der Sitzschiene in Verbindung steht, zeichnet sich durch seine besondere Laufruhe, hohe Kraftübertragungsmöglichkeit sowie günstige Herstellungskosten aus. Zudem lässt sich ein Spindelantrieb besonders klein ausgestalten, wodurch das Sitzuntergestell einen nur geringen Bauraum beansprucht.

Im Falle der erfindungsgemässen Verwendung einer längenveränderlichen Antriebseinheit ist nach einer besonders vorteilhaften Ausgestaltung der Erfindung vorgesehen, dass diese einenends gelenkig mit dem Sitzträger und anderenends gelenkig mit dem hinteren Schwenkarm, insbesondere mit einem Ausleger am hinteren Schwenkarm verbunden ist. Durch eine entsprechende Ausgestaltung kann der Bauraum in ergänzender Weise reduziert werden, da zur Anordnung der Antriebseinheit die zur gelenkigen Anordnung des hinteren Schwenkarms verwendeten Lagerungsmittel genutzt werden können. Eine vorteilhafter Weise vorzusehende Anordnung an einem Ausleger des Schwenkarms erlaubt dabei in besonders vorteilhafter Weise eine Anpassung der Antriebseinheit an die durch die Schwenkarme vorgegebene Kurvenbahn des Sitzträgers gegenüber der Sitzschiene und verhindert besonders wirkungsvoll eine Fehlfunktion der Sitzhöhenverstellung.

Ein Ausführungsbeispiel der Erfindung wird nachstehend mit Bezug auf die Zeichnungen näher erläutert. In den Zeichnungen zeigen:
- Fig. 1: eine Skizze einer Seitenansicht auf ein Sitzuntergestell in einer zwischen einer unteren Ausgangslage und einem Maximalabstand angeordneten Position;
- Fig. 2: eine Skizze einer Seitenansicht des Sitzuntergestells von Fig. 1 mit einem mit Maximalabstand zur Sitzschiene angeordneten Sitzträger und
- Fig. 3: eine Skizze einer Seitenansicht des Sitzuntergestells von Fig. 1 in einer Endlage, die ausgehend von der unteren Ausgangslage des Sitzträgers nach Überschreiten des Maximalabstands angeordnet ist.

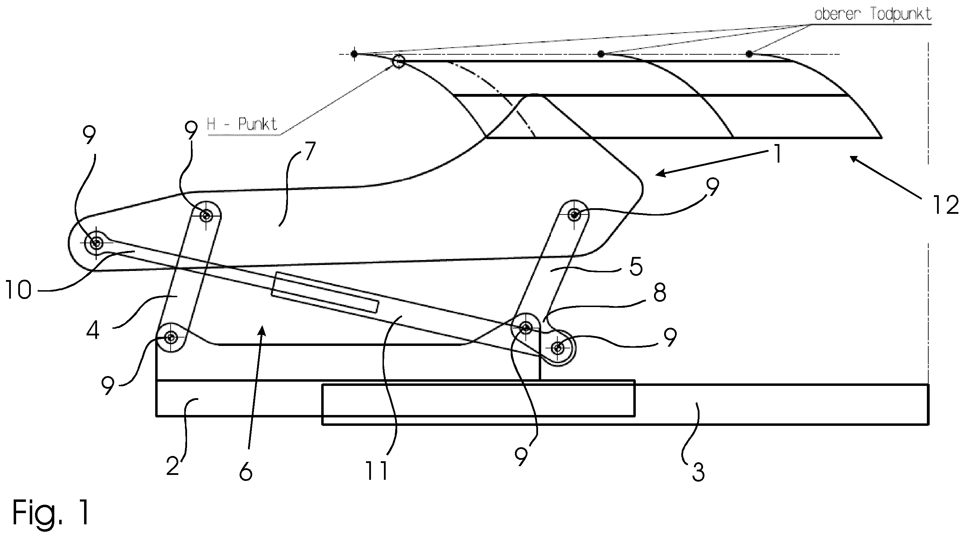

In den Fig. 1 bis 3 ist als Skizze in einer Seitenansicht ein Sitzuntergestell 1 mit jeweils einem Verstellfeld 12 dargestellt, welches den Bewegungsbereich des Sitzträgers 7 zeigt, das sich aus den gegebenen Verstellmöglichkeiten des Sitzträgers 7 in Längs- und Höhenrichtung gegenüber den Bodenschienen 3 ergibt. Mit dem H-Punkt ist dabei in den Figuren die Position dargestellt, die der Sitzträger 7 in der dargestellten Lage im Verstellfeld 12 einnimmt, wobei sich der Sitzträger 7 in allen dargestellten Positionen in der vordersten Stellung befindet, so dass der H-Punkt auf der vorderen Randlinie des Verstellfeldes 12 verläuft.

Der Sitzträger 7 dient zur Aufnahme einer hier nicht dargestellten Polsterung und ist beiderseits über einen vorderen Schwenkarm 4 und einen hinteren Schwenkarm 5 gelenkig mit einem aus einer Sitzschiene 2 und der Bodenschiene 3 gebildeten Schienenpaar verbunden. Zur gelenkigen Verbindung von Sitzschienen 2 und Sitzträger 7 dienen die vorderen Schwenkarme 4 und die hinteren Schwenkarme 5, die jeweils einenends an an dem Sitzträger 7 angeordneten Gelenkbolzen 9 und anderenends an an der Sitzschiene 2 angeordneten Gelenkbolzen 9 gelagert sind. Die Anordnung der Schwenkarme 4, 5 an dem Sitzträger 7 kann dabei grundsätzlich an beliebiger Stelle erfolgen, bspw. an entsprechend ausgebildeten Seitenteilen oder anderen geeigneten Bauelementen des Sitzträgers 7.

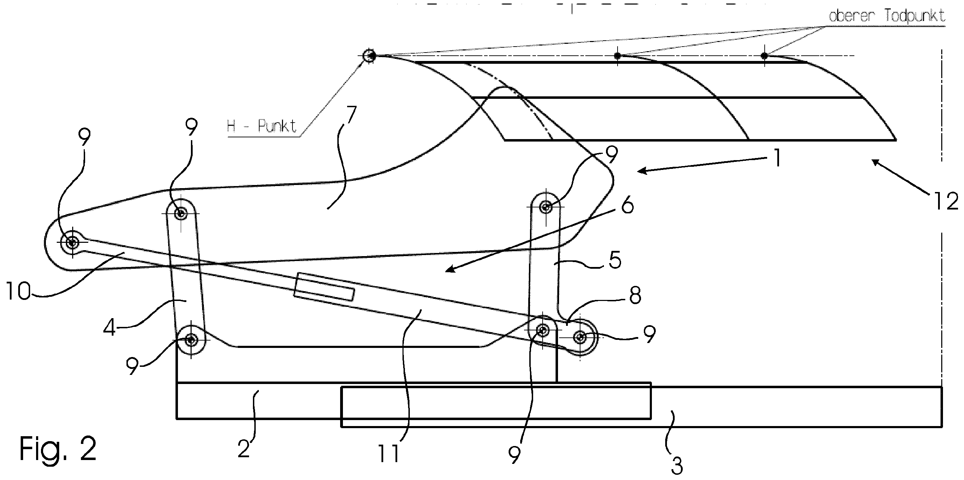

Die gelenkige Verbindung des Sitzträgers 7 mit der Sitzschiene 2 ermöglicht eine Einstellung der Sitzhöhe, wobei der Sitzträger 7 auf einer durch die Schwenkarme 4, 5 vorgegebenen Bahn verschwenkt werden kann. Zur Verstellung des Sitzträgers 7 gegenüber der Sitzschiene 2 dient dabei eine Antriebseinheit 6, welche einenends gelenkig mit dem Sitzträger 7 und anderenends gelenkig mit einem Ausleger 8 eines hinteren Schwenkarms 5 über einen Gelenkbolzen 9 verbunden ist. Eine Veränderung der Länge der Antriebseinheit 9, wobei eine Spindel 10 der Antriebseinheit 6 gegenüber einer Spindelmutter 11 (schematische Darstellung) verstellt wird, erlaubt eine Verstellung des Sitzträgers 7 aus einer in Fig. 1 dargestellten Zwischenposition in Höhenrichtung in die in Fig. 2 dargestellte Position, in der der Sitzträger 7 gegenüber der Sitzschiene 2 - wie aus der Position des H-Punktes im Verstellfeld 12 ersichtlich -einen Maximalabstand aufweist. Der Maximalabstand entspricht dabei dem oberen Totpunkt des Sitzträgers 7 gegenüber der Sitzschiene 2.

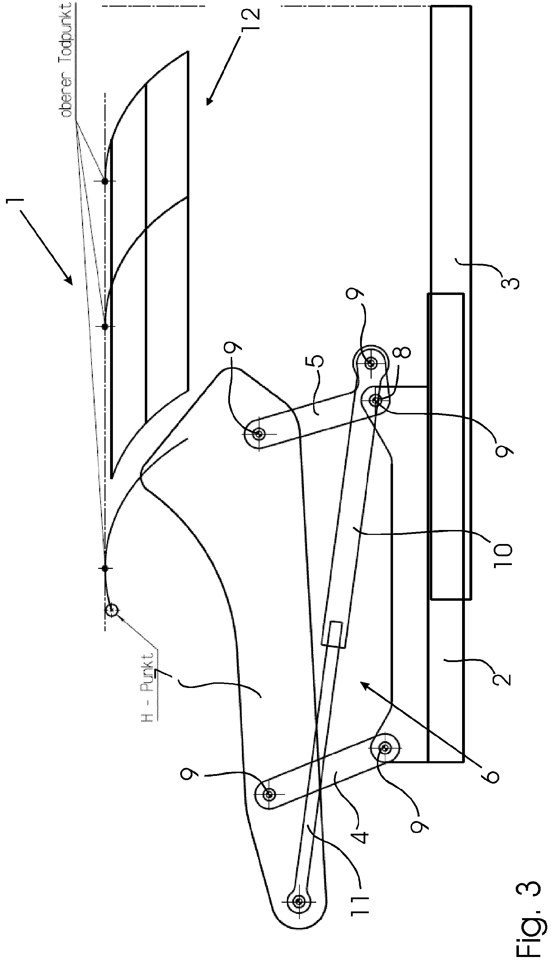

Um eine ergänzende Beinfreiheit hinter dem Sitzuntergestell 1 zu erreichen ist die Antriebseinheit 6 derart ausgebildet, dass sie eine Verstellung des Sitzträgers 7 bis in die in Fig. 3 dargestellte Endlage ermöglicht, in der der Sitzträger 7 ausgehend von einer unteren Endlage nach Überschreiten einer oberen Totpunktlage des Sitzträgers 7 angeordnet ist (vgl. Position des H-Punktes im Verstellfeld 12).

## Patentansprüche

1. Sitzuntergestell (1) für Kraftfahrzeugsitze, mit
- zwei im Abstand voneinander angeordneten und jeweils eine Sitzschiene (2) und eine Bodenschiene (3) aufweisenden Schienenpaaren,
- einem Sitzträger (7),
- jeweils zwei einenends gelenkig mit dem Sitzträger (7) und anderenends gelenkig mit den Sitzschienen (2) verbundenen, den Maximalabstand zwischen dem Sitzträger (7) und den Sitzschienen (2) festlegenden Schwenkarmen (4, 5) und
- einer den Sitzträger (7) zwischen einer unteren Ausgangslage und einer Endlage verstellenden Antriebseinheit (6), **dadurch gekennzeichnet, dass**
die Antriebseinheit (6) längenveränderlich sowie zur Verstellung des Sitzträgers (7) über eine im Normalbetrieb festgelegte Höhenendlage hinaus ausgebildet ist und
die Antriebseinheit (6) einenends gelenkig mit der Sitzschiene (2) und anderenends gelenkig mit dem Sitzträger (7) verbunden ist, wobei die Antriebseinheit (6) derart ausgebildet ist, dass die Endlage des Sitzträgers (7) dem Maximalabstand des Sitzträgers (7) entspricht und die Antriebseinheit (6) zur Verstellung des Sitzträgers (7) in eine Endlage ausgebildet ist, die ausgehend von der unteren Ausgangslage des Sitzträgers (7) nach Überschreiten des Maximalabstandes angeordnet ist, wobei die Antriebseinheit (6) mit einer Sensorik versehen ist, die eine Verstellung des Kraftfahrzeugsitzes mit dem Sitzuntergestell (1) in den oberen Totpunkt bzw. darüber hinaus verhindert, wenn der Kraftfahrzeugsitz (1) belegt ist.

2. Sitzuntergestell nach Anspruch 1, **dadurch gekennzeichnet, dass** die Antriebseinheit (6) zur Verstellung des Sitzträgers (7) in die den Maximalabstand aufweisende Position ausgebildet ist.

3. Sitzuntergestell nach einem der vorhergehenden Ansprüche, **dadurch gekennzeichnet, dass** die Antriebseinheit (6) durch einen Spindelantrieb gebildet ist.

4. Sitzuntergestell nach einem der vorhergehenden Ansprüche, **dadurch gekennzeichnet, dass** die Antriebseinheit (6) einenends gelenkig mit dem Sitzträger (7) und anderenends gelenkig mit einem hinteren Schwenkarm (5) verbunden ist.

5. Sitzuntergestell nach einem der vorhergehenden Ansprüche, **dadurch gekennzeichnet, dass** die Antriebseinheit anderenends gelenkig mit einem Ausleger (8) am hinteren Schwenkarm (5) verbunden ist.

## Claims

1. Seat underframe (1) for motor vehicle seats, with
- two pairs of rails which are arranged at a distance from each other and each have a seat rail (2) and a floor rail (3),
- a seat carrier (7),
- in each case two pivot arms (4, 5) which are connected at one end in an articulated manner to the seat carrier (7) and at the other end in an articulated manner to the seat rails (2) and define the maximum distance between the seat carrier (7) and the seat rails (2),
- a drive unit (6) adjusting the seat carrier (7) between a lower starting position and an end position,
**characterized in that** the drive unit (6) is designed to be changeable in length and for adjusting the seat carrier (7) beyond a height end position which is fixed during normal operation, and the drive unit (6) is connected at one end in an articulated manner to the seat rail (2) and at the other end in an articulated manner to the seat carrier (7), wherein the drive unit (6) is designed in such a manner that the end position of the seat carrier (7) corresponds to the maximum distance of the seat carrier (7), and the drive unit (6) is designed for adjusting the seat carrier (7) into an end position which, starting from the lower starting position of the seat carrier (7), is arranged after the maximum distance is exceeded, wherein the drive unit (6) is provided with a sensor device which prevents an adjustment of the motor vehicle seat together with the seat underframe (1) into the upper dead centre or therebeyond when the motor vehicle seat (1) is occupied.

2. Seat underframe according to Claim 1, **characterized in that** the drive unit (6) is designed for adjusting the seat carrier (7) into the position having the maximum distance.

3. Seat underframe according to either of the preceding claims, **characterized in that** the drive unit (6) is formed by a spindle drive.

4. Seat underframe according to one of the preceding claims, **characterized in that** the drive unit (6) is connected at one end in an articulated manner to the seat carrier (7) and at the other end in an articulated manner to a rear pivot arm (5).

5. Seat underframe according to one of the preceding claims, **characterized in that** the drive unit is connected at the other end in an articulated manner to an extension arm (8) on the rear pivot arm (5).

## Revendications

1. Bâti de siège (1) pour sièges de véhicules automobiles, comprenant
- deux paires de rail disposées à distance l'une de l'autre et présentant à chaque fois un rail de siège (2) et un rail de sol (3),
- un support de siège (7),
- à chaque fois deux bras pivotants (4, 5) connectés à une extrémité de manière articulée au support de siège (7) et à l'autre extrémité de manière articulée aux rails de siège (2), fixant l'écart maximal entre le support de siège (7) et les rails de siège (2), et
- une unité d'entraînement (6), déplaçant le support de siège (7) entre une position de départ inférieure et une position finale,
**caractérisé en ce que** l'unité d'entraînement (6) est réalisée de manière variable en longueur ainsi que pour le déplacement du support de siège (7) au-delà d'une position finale en hauteur fixée en mode normal et
l'unité d'entraînement (6) est connectée à une extrémité de manière articulée au rail de siège (2) et à l'autre extrémité de manière articulée au support de siège (7), l'unité d'entraînement (6) étant réalisée de telle sorte que la position finale du support de siège (7) corresponde à l'écart maximal du support de siège (7) et l'unité d'entraînement (6) étant réalisée pour le déplacement du support de siège (7) dans une position finale, qui est disposée à partir de la position de départ inférieure du support de siège (7) après le dépassement de l'écart maximal, l'unité d'entraînement (6) étant pourvus d'un système de capteur qui empêche un déplacement du siège de véhicule automobile avec le bâti de siège (1) dans le point mort supérieur ou au-delà de celui-ci lorsque le siège de véhicule automobile (1) est occupé.

2. Bâti de siège selon la revendication 1, **caractérisé en ce que** l'unité d'entraînement (6) est réalisée pour le déplacement du support de siège (7) dans la position présentant l'écart maximal.

3. Bâti de siège selon l'une quelconque des revendications précédentes, **caractérisé en ce que** l'unité d'entraînement (6) est formée par un entraînement à broche.

4. Bâti de siège selon l'une quelconque des revendications précédentes, **caractérisé en ce que** l'unité d'entraînement (6) est connectée à une extrémité de manière articulée au support de siège (7) et à l'autre extrémité de manière articulée à un bras pivotant arrière (5).

5. Bâti de siège selon l'une quelconque des revendications précédentes, **caractérisé en ce que** l'unité d'entraînement est connectée à l'autre extrémité de manière articulée à un bras oscillant (8) au niveau du bras pivotant arrière (5).
